# EUROPEAN PATENT APPLICATION

(11) **EP 2 789 757 A1**
(43) Date of publication of application: **15.10.2014**
(21) Application number: 14164079.7
(22) Date of filing: 09.04.2014
(51) Int. Cl.: E04B 1/76

(54) **Insulation assembly for floor joists**

(30) Priority: 12.04.2013 GB 201306701
(71) Applicant: Enviroform Solutions Limited, Warrenpoint Down BT34 3PN (GB)
(72) Inventor: BROWN, Liam, Warrenpoint, County Down BT34 3PN (GB)
(74) Representative: Waller, Stephen

(57) **Abstract**

An insulation assembly (10) for floor joists comprising a plurality of panels (12,14,16,18,20) formed from a thermally insulating material, said panels being affixed in side by side relationship to at least one layer of vapour impermeable sheet material (22), said plurality of panels comprising a first panel (12) dimensioned to lie, in use, against an inner face of a wall of a building between adjacent floor joists extending therefrom, and second and third panels (14,16) provided adjacent opposite ends of said first panel, arranged to extend substantially perpendicular to the first panel and to respectively lie, in use, against opposing side faces of said adjacent floor joists.

## Description

This invention relates to an insulation assembly for floor joists.

Insulation is added to buildings to conserve energy by preventing heat loss through floors, walls, ceilings and lofts.

With ever increasing fuel and energy costs there is a desire to reduce the impact caused by energy use in buildings and there is a continuous drive to improve the thermal efficiency of both old and new build buildings.

It is known to attach composite insulated boards to the inner faces of the exterior walls of a building to improve thermal efficiency of such walls, such insulated boards typically comprising a core of thermally insulating material sandwiched between substantially rigid outer layers. A plasterboard or other substantially rigid layer may be provided on an outer face of at least one side of the board, preferably the side forming an exposed face of the board. The insulated boards may also incorporate or be provided with a vapour control layer providing a barrier to the passage of moisture therethrough.

A problem with such known composite insulated boards, when applied to the inner faces of the exterior walls of a building, is that gaps remain in the insulation between the floors of a building (i.e. between the ceiling of a lower story and the floor of an upper story), leading to cold bridging and/or vapour and/or air infiltration through such gaps.

Prior art attempts to solve this thermal bridging problem have involved stripping back the floorboards and applying a thermally insulating product, such as a layer of mineral fibre, between the floor joists, at least in the region of the exterior walls. However, this can lead to over insulation of the ends of the floor joists, causing the ends of the joists to become wet, leading to problems of wet rot of the ends of the joists. Furthermore, such prior art attempts to solve thermal bridging between floors of a building have completely failed to address the issue of vapour control. The gaps between the floors of the building result in gaps in the vapour control layer (VCL) applied to the walls of the building.

An object of this invention is to provide an improved insulation assembly and method of installation that will minimise any cold bridging, vapour and/or air infiltration between floor levels of a building.

According to a first aspect of the present invention there is provided an insulation assembly for floor joists comprising a plurality of panels formed from a thermally insulating material, said panels being affixed in side by side relationship to at least one layer of vapour impermeable sheet material, said plurality of panels comprising a first panel dimensioned to lie, in use, against an inner face of a wall of a building between adjacent floor joists extending therefrom, and second and third panels provided adjacent opposite ends of said first panel, arranged to extend substantially perpendicular to the first panel and to respectively lie, in use, against opposing side faces of said adjacent floor joists.

Preferably respective fold lines are defined between said first panel and said second and third panels to enable the assembly to be folded between a substantially flat position, wherein said panels lie in a common place, and a folded position, wherein said second and third panels extend substantially perpendicular to said first panel.

Preferably said fold lines are defined by portions of said at least one layer of vapour impermeable material extending between the panels.

Preferably said at least one layer of vapour impermeable sheet material extends beyond the periphery of said plurality of panels.

Regions of said at least one layer of impermeable sheet material extending beyond the periphery of said second and third panels may be arranged, in use, to be wrapped around said adjacent floor joists.

Preferably said plurality of panels are sandwiched between first and second layers of vapour impermeable sheet material.

Preferably an outer face of said assembly is coated in an adhesive to enable the assembly to be affixed to the wall and adjacent floor joists.

In one embodiment, a layer of double sided tape is provided on an outer face of the assembly to enable the respective panels to be adhered to the wall and adjacent floor joists.

Preferably said insulating material comprises one or more of Aerogel, PIR (polyisocyanurate), phenolic resin, vacuum insulation or mineral fibre insulation.

Said first panel may be divided into a central section arranged to extend between said adjacent floor joists, an upper section arranged to extend up the wall above the floor joists and a lower section arranged to extend down the wall below said floor joists. Parallel fold lines may be defined between said central, upper and lower sections of the first panel to allow the upper and lower sections to be folded with respect to the central section.

Said plurality of panels may be formed from a single piece of material, said first, second and third panels being delimited by cut or score lines, said cut or score lines enabling the individual panels to fold with respect to one another about said cut or score lines. Similarly, said first panel may be provided with cut or score lines to divide the first panel into said central, upper and lower sections, the sections of the first panel being foldable about said cut or score lines.

According to a further aspect of the present invention there is provided a method of insulating an exterior wall of a building between adjacent floor joists, said method comprising providing an insulation assembly comprising a plurality of panels formed from a thermally insulating material, said panels being affixed in side by side relationship to at least one layer of vapour impermeable sheet material and applying a first panel of said plurality of panels to the wall to extend between said adjacent floor joists, applying second and third panels of said plurality of panels to respective opposing sides of the adjacent floor joists.

Preferably the method further comprises the step of placing vapour control layers onto the wall above and below said insulation assembly, wherein said vapour control layers are placed in overlapping relationship with said at least one layer of vapour impermeable sheet material of said insulation assembly.

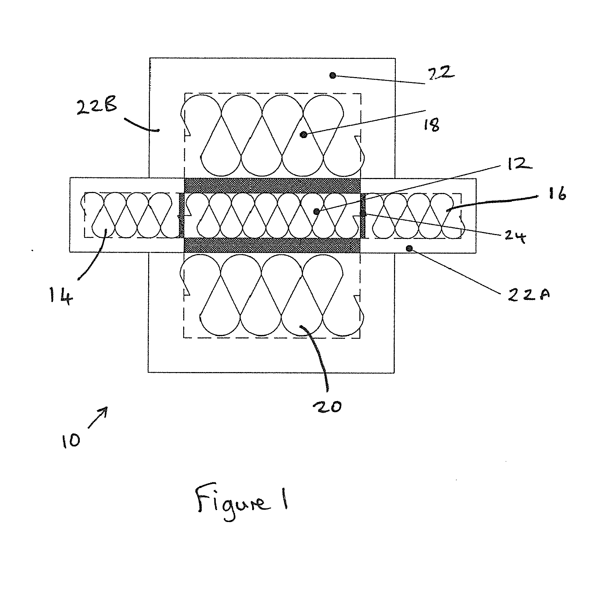

An embodiment of the present invention will now be described, by way of example only, with reference to the accompanying drawings, in which :-
Figure 1 is a front view of an insulation assembly in accordance with an embodiment of the present invention; and
Figure 2 is a perspective view of the insulation assembly of Figure 1 in use.

As shown in the drawings, an insulation assembly 10 for floor joists in accordance with an embodiment of the present invention comprises a plurality of planar panels 12,14,16,18,20 formed from a thermally insulating material, the panels being sandwiched between sheets 22 of vapour impermeable material, preferably a polymeric material, such as a polypropylene or low density polyethylene or any other suitable moisture impermeable sheet material. The sheets 22 of vapour impermeable material may have a metallised surface coating to reduce radiant heat loss.

The panels 12,14,16,18,20 may be formed from a single sheet of material having cut or score lines formed therein to delimit said individual panels and to enable the panels to be folded with respect to one another.

A central panel 12 is dimensioned to have a width substantially equal to the spacing between adjacent floor joists 2,4 of a building and to have a depth substantially equal to the vertical thickness of the floor joists 2,4 so that the central panel 12 will fit against an exterior wall 6 of a building in the space between adjacent floor joists 2,4 extending therefrom.

A pair of side panels 14,16 are provided on either side of the central panel 12, each side panel 14,16 having a width substantially equal to the vertical thickness of the joists 2,4 and a length sufficient to thermally insulate the end regions of the joists 2,4 adjacent the wall 6, in use, and to provide the desired thermal performance.

Upper and lower panels 18,20 are provided respectively above and below the central panel 12 to extend over regions of the wall 6 above and below the floor joists 2,4.

Each thermally insulating panel 12,14,16,18,20 may be formed from Aerogel, PIR (polyisocyanurate) or phenolic resin or other suitable materials, such as vacuum insulation (having an internal void from which air is removed) or mineral fibre insulation. A preferred material is Aerogel due to its high thermal efficiency for a given thickness. The panels may have a thickness of between 10mm and 20mm, or any other thickness required to provide the desired thermal performance.

Regions of the sheets 22 of vapour impermeable material extending across the gaps or fold lines between the panels define live hinges 24, allowing the panels 12,14,16,18,20 to be folded with respect to one another, as will be described below in more detail.

The sheets 22 of vapour impermeable material are dimensioned to extend beyond the periphery of the thermally insulating panels 12,14,16,18,20.

A later of double sided tape or similar adhesive material is provided on an outer face of one of the sheets of vapour impermeable material.

The insulation assembly 10 may be supplied in a flat configuration, with the panels 12,14,16,18,20 laying in a common plane.

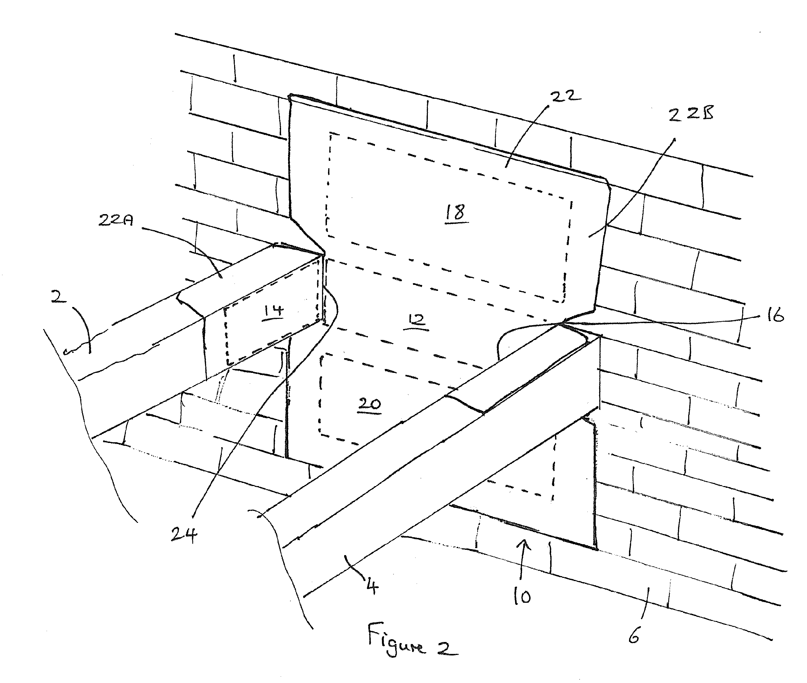

In use, the skirting and floor boards (not shown) adjacent an exterior wall 6 of a building are removed. The side panels 14,16 of the insulation assembly 10 are then folded to extend perpendicular to the central panel 12 such that the central panel 12 can be located between adjacent floor joists 2,4 extending from the wall 6, the side panels 14,16 laying against opposing side faces of the floor joists 2,3, as shown in Figure 2. Regions 22A of the vapour impermeable sheets 22 above and below each side panel 14,16 may be wrapped around the joists 2,3 to be adhered to the upper and lower sides thereof. These regions may overlap corresponding regions of adjacent insulation assemblies to ensure continuity of the moisture barrier provided by such sheets.

The upper and lower panels 18,20 are arranged to extend along the wall 6, above and below the floor joists. The insulation assembly can be fixed in such position by means of the double sided tape provided thereon, said tape adhering the panels 12,14,16,18,20 to the wall 6 and joists 2,3.

Regions 22B of the vapour impermeable sheets 22 extending beyond the sides of the upper and lower panels 18,20 may overlap and be adhered to similar regions of adjacent insulation assemblies to further ensure continuity of the VCL of the wall.

Subsequent to installation of such insulation assemblies 10 between the floor joists 2,4, the exterior walls 6 of the building may be lined with a vapour control layer (VCL), which may be incorporated into thermally insulating boards applied to the walls, the VCL overlapping the upper and lower panels 18,20 to form a continuous barrier to the passage of moisture over the entire surface of the wall.

Alternatively, the upper and lower panels 18,20 may be folded to extend perpendicular to the central panel 12, such that regions 22B of the vapour impermeable sheets 22 abut or are attached to the upper faces of the joists 2,3 to form a box like structure between the joists 2,3. In such case, the outermost edge region 22C of the vapour impermeable sheets may be folded to engage an adjacent floor board or an adjacent insulation board applied to the wall adjacent the insulation assembly. The insulation cladding applied to the wall may be arranged to sit on top of the folded upper panel 18, while the insulation cladding applied to the wall below the joists 2,3 may engage a lower face of the folded lower panel 20, thus forming avoiding cold bridging and providing a continuous moisture barrier over the wall 6.

The invention is not limited to the embodiment(s) described herein but can be amended or modified without departing from the scope of the present invention.

## Claims

1. An insulation assembly for floor joists comprising a plurality of panels formed from a thermally insulating material, said panels being affixed in side by side relationship to at least one layer of vapour impermeable sheet material, said plurality of panels comprising a first panel dimensioned to lie, in use, against an inner face of a wall of a building between adjacent floor joists extending therefrom, and second and third panels provided adjacent opposite ends of said first panel, arranged to extend substantially perpendicular to the first panel and to respectively lie, in use, against opposing side faces of said adjacent floor joists.

2. An assembly as claimed in claim 1, wherein respective fold lines are defined between said first panel and said second and third panels to enable the assembly to be folded between a substantially flat position, wherein said panels lie in a common place, and a folded position, wherein said second and third panels extend substantially perpendicular to said first panel.

3. An assembly as claimed in claim 2, wherein said fold lines are defined by portions of said at least one layer of vapour impermeable material extending between the panels.

4. An assembly as claimed in claim 2, wherein said plurality of panels are formed from a single sheet of material, said fold lines being defined by cut or score lines formed in said sheet of material, said cut or score lines enabling the individual panels to fold with respect to one another about said cut or score lines.

5. An assembly as claimed in any preceding claim, wherein said at least one layer of vapour impermeable sheet material extends beyond the periphery of said plurality of panels.

6. An assembly as claimed in claim 5, wherein regions of said at least one layer of impermeable sheet material extending beyond the periphery of said second and third panels are arranged, in use, to be wrapped around said adjacent floor joists.

7. An assembly as claimed in any preceding claim, wherein said plurality of panels are sandwiched between first and second layers of vapour impermeable sheet material.

8. An assembly as claimed in any preceding claim, wherein an outer face of said assembly is coated in an adhesive to enable the assembly to be affixed to the wall and adjacent floor joists.

9. An assembly as claimed in any preceding claim, wherein a layer of double sided tape is provided on an outer face of the assembly to enable the respective panels to be adhered to the wall and adjacent floor joists.

10. An assembly as claimed in any preceding claim, wherein said insulating material comprises one or more of Aerogel, PIR (polyisocyanurate), phenolic resin, vacuum insulation or mineral fibre insulation.

11. An assembly as claimed in any preceding claim, wherein said first panel is divided into a central section arranged to extend between said adjacent floor joists, an upper section arranged to extend up the wall above the floor joists and a lower section arranged to extend down the wall below said floor joists.

12. An assembly as claimed in claim 11, wherein parallel fold lines are defined between said central, upper and lower sections of the first panel to allow the upper and lower sections to be folded with respect to the central section.

13. An assembly as claimed in claim 12, wherein said parallel fold lines are defined by cut or score lines to divide the first panel into said central, upper and lower sections, the sections of the first panel being foldable about said cut or score lines.

14. A method of insulating an exterior wall of a building between adjacent floor joists, said method comprising providing an insulation assembly comprising a plurality of panels formed from a thermally insulating material, said panels being affixed in side by side relationship to at least one layer of vapour impermeable sheet material and applying a first panel of said plurality of panels to the wall to extend between said adjacent floor joists, applying second and third panels of said plurality of panels to respective opposing sides of the adjacent floor joists.

15. A method as claimed in claim 14, further comprising the step of placing vapour control layers onto the wall above and below said insulation assembly, wherein said vapour control layers are placed in overlapping relationship with said at least one layer of vapour impermeable sheet material of said insulation assembly.
